(19) **Europäisches Patentamt / European Patent Office / Office européen des brevets**

(11) **EP 3 321 233 A1**

(12) **EUROPEAN PATENT APPLICATION**

(43) Date of publication:
**16.05.2018 Bulletin 2018/20**

(21) Application number: **17183651.3**

(22) Date of filing: **28.07.2017**

(51) Int Cl.:
*C02F 1/46* (2006.01)      *C02F 1/32* (2006.01)
*C02F 1/34* (2006.01)      *C02F 1/36* (2006.01)
*C02F 1/78* (2006.01)      *C02F 1/461* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.11.2016 RU 2016144519**

(71) Applicants:
• **Skakunov, Iurii Pavlovich**
  **601620 Strunino (RU)**
• **Skakunov, Aleksandr Yurievich**
  **601620 Strunino (RU)**
• **Koshmanov, Dmitry Evgenievich**
  **109518 Moscow (RU)**

• **Antokhin, Valentin Aleksandrovich**
  **109125 Moscow (RU)**

(72) Inventors:
• **Skakunov, Iurii Pavlovich**
  **601620 Strunino (RU)**
• **Skakunov, Aleksandr Yurievich**
  **601620 Strunino (RU)**
• **Koshmanov, Dmitry Evgenievich**
  **109518 Moscow (RU)**
• **Antokhin, Valentin Aleksandrovich**
  **109125 Moscow (RU)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **METHOD AND DEVICE FOR IN-STREAM AQUEOUS MEDIUM TREATMENT**

(57)   The invention relates to a device for in-stream aqueous medium treatment, and to a method for in-stream aqueous medium treatment.

An object of the present invention is to provide a high-efficiency and high-performance water treatment technology for surface sources as well as aqueous media of different origin (including various solutions, technical and waste waters) by performing a one-time complex in-stream plasma, ultraviolet, thermobaric, cavitation and ultrasonic water treatments to increase the finished product quality by bringing the treated water in line with sanitary and hygienic standards.

The in-stream aqueous medium treatment is accomplished by conversion of the aqueous medium flow into a two-phase flow by implementing a pressure drop at the nozzle outlet and by plasma treatment of the flow, followed by deceleration due to the flow expansion in the diffuser.

The present invention provides the high efficient running purification of aqueous medium.

Fig. 2.

EP 3 321 233 A1

**Description**

The present invention relates to the technology for purifying water or aqueous medium of different origin, in particular, to high-productive methods for a one-time integrated water treatment in a stream of aqueous medium without using chemical reagents. The proposed technology includes plasma treatment, ultraviolet radiation treatment, thermobaric, cavitation and ultrasonic treatments. The invention is designed to protect human life and health by bringing physical, chemical and biological parameters of consumed water in line with the regulatory requirements for water quality.

Water is an indispensable condition for life sustaining, since its characteristics are responsible for a quality and longevity of people life. Individual consumption of water depends on a variety of factors, but on average, lies in the range of 12 to 200 liters per person daily. According to the report of the World Health Organization (WHO), in 2007 1.1 billion people had no access to improved sources of water, and 88% of 4 billion cases of diarrhea were caused by the use of unsafe water, as well as inadequate sanitation and hygiene. In addition, by WHO's experts, 1.8 million people die of diarrheal diseases every year, 94% of which can be prevented by changing environmental conditions, including access to safe (cleaned and prepared) water.

There are several basic methods of water disinfection: chlorination, ozonization, and application of ultraviolet radiation. The disinfection means a destruction of microorganisms in water (prokaryotes, eukaryotes and viruses).

Any method of water treatment has its pros and cons. Modern water conditioning is based on multi-stage and complex methods intended for bringing physical, chemical and biological parameters of water in line with the norm. The main trend in the development of water disinfection technology is the complexity of disinfection methods, based on synergistic effects of various methods. Table 1 shows the comparative data on known methods of water disinfection.

Table 1. Comparison of water disinfection methods (EPA, Guidance Manual Alternative Disinfectants and oxidants)

| Disadvantages of treatment method | Type of treatment (reagent) | | | | | |
|---|---|---|---|---|---|---|
| | Chlorine | Ozone | Chlorine dioxide | Chloramine | Ozone/ peroxide | UV-radiation |
| Formation of trigalomethanes and other chlororganic derivatives | Yes | Sometimes | No | Yes | Sometimes | No |
| Formation of oxidized organic substance | Sometimes | Yes | Sometimes | No | Yes | Sometimes |
| Formation of inorganic by-products (bromates, chlorates) | No | Sometimes | Yes | No | Yes | No |
| Effect of water conservation | Yes | No | Yes | Yes | No | No |
| Influence of source turbidity on disinfection | No | Sometimes | No | No | Sometimes | Yes |
| Disinfection from lamblia (less than $10^2$) | Yes | Yes | Yes | No | No | No |
| Disinfection from lamblia (at least $10^2$) | No | Yes | Yes | No | No | No |
| Disinfection from cryptosporidia spores (less than $10^2$) | No | Yes | Yes | No | No | No |
| Disinfection from cryptosporidia spores (at least $10^2$) | No | Yes | No | No | No | No |
| Disinfection from viruses (less than $10^2$) | Yes | Yes | Yes | No | No | Yes |
| Disinfection from viruses (at least $10^2$) | Yes | Yes | Yes | No | No | Yes |
| Requirements for operators of disinfection plant: 1 - low; | 1 | 5 | 5 | 2 | 5 | 3 |

(continued)

| Disadvantages of treatment method | Type of treatment (reagent) | | | | | |
| --- | --- | --- | --- | --- | --- | --- |
| | Chlorine | Ozone | Chlorine dioxide | Chloramine | Ozone/ peroxide | UV-radiation |
| 5 - high | | | | | | |

It should be noted that for obtaining positive results of water purification, as a rule, it is not sufficient to use one of the above methods, because none of them is universal, and the modern water conditioning implies a multi-stage purification system.

From the state of the art, there are known a method and device for water treatment (Russian patent No. 2272791, 06.09.2004, IPC C02F1/74), wherein an influence on harmful components contained in water is achieved by creating a pressure gradient in the water mass to form an accelerated water flow which then is exposed to bactericidal radiation. At the same time, the ultraviolet (UV) radiation is carried out uninterruptedly, and nozzle spraying of water flow is performed in an air medium involving mechanisms of cavitation and oxidation to neutralize substances dissolved in water. Coarse fractions are then separated using a hydrocyclone, before and after which the flow is treated by magnetic field. A disadvantage of this technical solution is many stages and low productivity of the water treatment process. In addition, it should be noted that the known technology is insufficiently effective in terms of improving microbiological indicators of water, as well as the liquid medium sterilization system has increased energy capacity.

The closest analogue of the claimed device for aqueous medium treatment is the device described in the utility patent of Ukraine No. 35346 (10.09.2008, IPC C02F1/00). This document discloses a plant for in-stream disinfection of ballast water and other aqueous media. The plant comprises a vacuum-creating device, supply and discharge pipelines. The vacuum-creating device is made in the form of a nozzle, mounted in the front wall of vacuum chamber, which is equipped with a pressure gage. The supply line is equipped with a series-connected filter, a pump, a flowmeter, a thermometer and a pressure gage, and the discharge pipeline is equipped with a backpressure regulator and a pressure gage, thereby the vacuum section length relatively to its cavity diameter is $L = (3 - 15) \cdot D$, where L is the length of vacuum section, D is the diameter of vacuum section cavity, while the nozzle length relative to the diameter of its original cut is determined by the ratio $l_c/d_c = (0.7 - 7)$, where $l_c$ is the nozzle length, $d_c$ is the nozzle diameter, and the ratio of nozzle cross sectional area at the edge level and the vacuum chamber cross-section is $f/F = (0.2 - 0.6)$, where f is the nozzle area, F is the vacuum chamber area.

The disadvantage of said aqueous medium treatment device is insufficient effectiveness of microorganisms destruction in aqueous media.

The closest analogue of the claimed method for aqueous medium treatment is the method for liquid media sterilization disclosed in Russian patent No. 2325329 (27.05.2008, IPC C02F1/36, C02F1/32), wherein an influence on microorganisms contained in water having a size of 1 to 10000 $\mu$m is achieved by creating a pressure gradient in the water mass to form an accelerated water flow which then is exposed to bactericidal radiation. In this case, after flow acceleration with formation of local decompression, shock wave and temperature impulses in its volume, the water flow is sharply slowed down, and afterwards it is exposed to bactericidal radiation in the form of pulsating ultraviolet radiation and/or plasma discharge in a microbubble liquid-air medium. The plasma discharge is created in the form of a transverse corona discharge, overlapping the cross-section of the water flow passing through it in the reaction cell.

The known method of aqueous medium treatment has a number of disadvantages. In the specification of Russian patent No. 2325329 the authors say that after deceleration (collapse of vapor-gas bubbles) liquid was exposed to UV-radiation with a wavelength of 185 nm. However, after deceleration, not all vapor-gas bubbles collapse, but considering that the lifetime of microbubbles of $4 \pm 1$ $\mu$m in diameter can be some minutes, the intensive absorption of UV-radiation by microbubbles is in progress, and, therefore, the water treatment does not occur throughout the entire volume. Further, the plasma discharge is formed perpendicularly to the liquid flow in the separate chamber under a gage pressure. An electrode gap is about 10 mm (this can be judged by voltage at electrodes of 850 V). In addition, air is supplied to the chamber from a compressor of a 5 kW power, and with such a compressor power, a uniform distribution of air bubbles cannot be created throughout the whole volume of the reaction cell. To ignite the plasma, it is necessary to apply a current of about 3 A, but at this current the maximum operating time of rod electrodes is about 30 minutes, and then the electrodes are burnt.

An object of the present invention is to provide a high-efficiency and high-performance technology of water treatment, particularly water from surface sources, as well as an aqueous medium of different origin (including various solutions, industrial and waste water) by performing a one-time in-stream complex plasma, ultraviolet, thermobaric, cavitation and ultrasonic water treatments to increase the finished product quality and bring the treated water in line with the sanitary and hygienic regulations and standards ( SanPiN 2.1.4.1074-01 "Drinking water. Hygienic requirements for water quality of centralized drinking water supply systems. Quality control" The Ministry of Healthcare of the Russian Federation (Minzdrav), 2002. 62 p.).

The technical result consists in improving the efficiency of water disinfection with increasing the microbiological quality indicators of the aqueous medium.

The assigned object can be solved, and the claimed technical result can be achieved using a device for in-stream aqueous medium treatment which comprises a reaction chamber with a supply branch pipe and a discharge branch pipe and a nozzle first-stage element installed at the reaction chamber inlet which ensures a pressure drop at the reaction chamber inlet. Furthermore, the device comprises a diffuser disposed at the reaction chamber outlet and intended to decelerate the flow. In this case, the reaction chamber is made of a dielectric material and is formed by annular electrodes successively arranged in the flow direction and spaced along the chamber length to create the longitudinal plasma discharge in the reaction chamber cavity.

In the preferred embodiment of the invention, the electrodes are made of a metallic conductive material selected from the group consisting of molybdenum, silver, copper, and alloys of said metals.

In another embodiment of the invention, the electrodes are made of stainless steel, conductive porous ceramic, graphite or siliconized graphite.

The assigned object can be solved, and the claimed technical result can be also achieved by using an in-stream aqueous medium treatment method which comprises a pressurized flow into a nozzle first-stage element with further drainage of the flow into a reaction chamber for aqueous medium treatment to form a two-phase gas-liquid flow followed by deceleration and condensation of the two-phase flow at the reaction chamber outlet. In this case, the longitudinal plasma discharge is created in the reaction chamber, which initiates UV-radiation and synthesis of ozone from oxygen released from the aqueous phase during formation of the two-phase gas-liquid flow, while during the flow deceleration due to the gas bubbles collapse, an ultrasonic field and a local overheating of the water flow are created.

In a preferred embodiment of the invention, the aqueous medium is supplied to the nozzle first-stage element under pressure in the range from 0.2 to 2 MPa.

Also in preferred embodiments of the invention:

- The longitudinal plasma discharge is created by applying a voltage from 500 to 2000 V and a current from 20 to 200 mA to electrodes,
- The plasma discharge acts on the aqueous medium flow during the period of time from $10^{-4}$ to $10^{-2}$ seconds;
- The reaction chamber pressure is maintained in the range from 1 to 10 kPa.

The invention will now be described in detail with reference to the drawings.

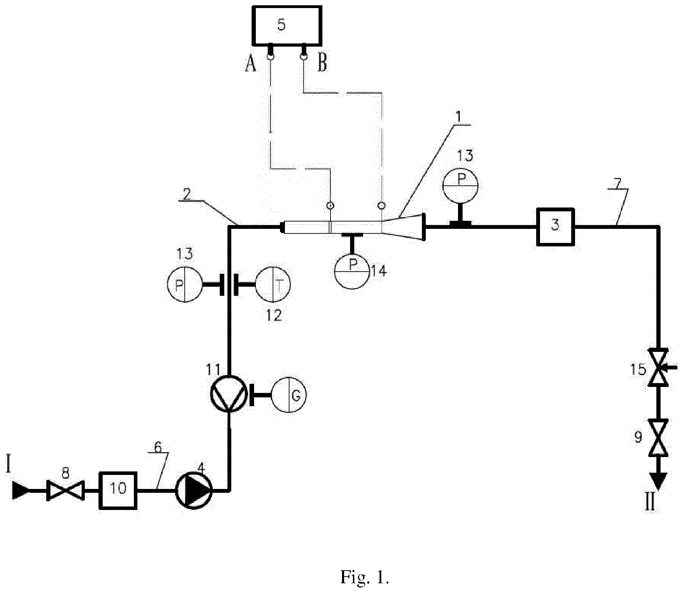

Fig. 1 shows a schematic diagram of the plant for aqueous medium treatment in which the claimed device for in-stream aqueous medium treatment is used.

In Fig. 1 the following designations are used:

    1 - in-stream aqueous medium treatment device;
    2 - pipeline;
    3 - filter at outlet of in-stream aqueous medium treatment device;
    4 - aqueous medium supply pump;
    5 - DC/AC generator
    6 - supply pipeline;
    7 - discharge pipeline;
    8, 9 - shut-off valves;
    10 - filter at inlet of in-stream aqueous medium treatment device;
    11 - flowmeter;
    12 - aqueous medium temperature sensor;
    13, 14 - aqueous medium pressure sensors;
    15 - control valve;
    I - supply head pipeline;
    II - drain pipeline for purified water discharge.

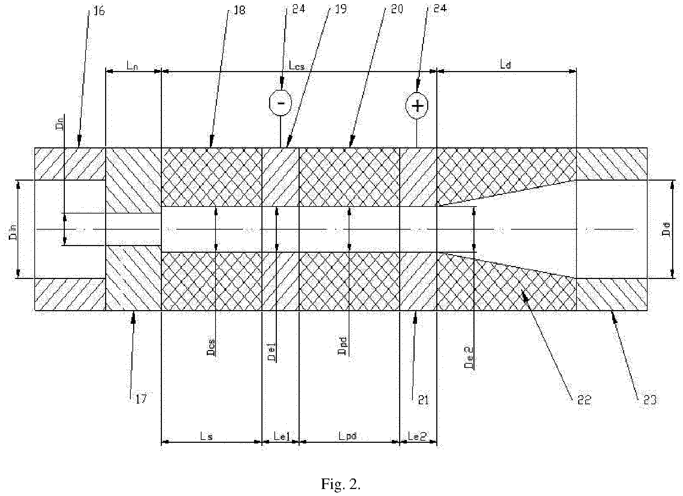

Fig. 2 shows a schematic diagram of the claimed device for in-stream aqueous medium treatment made as a supersonic plasma reactor. In Fig. 2 the following designations are used:

    16 - liquid supply branch pipe;
    17 - nozzle first-stage element;

18 - two-phase flow forming zone;

19 and 21 - annular electrodes;

20 - flow plasma treatment zone;

22 - diffuser;

23 - discharge branch pipe;

24 - contacts for connection to generator.

The claimed device operates as follows.

The in-stream aqueous medium treatment is performed by conversion of an aqueous flow into a supersonic two-phase flow due to a sudden drop in pressure at the outlet of nozzle first-stage element 17 (first pressure jump), and by plasma treatment of the flow in flow plasma treatment zone 20, followed by deceleration during expansion of the flow in diffuser 22 (second pressure jump). To perform treatment, the aqueous medium, for example as the river water, is fed under pressure via supply branch pipe 16 into nozzle first-stage element 17, further the flow drains into the reaction chamber cavity, which is the space from two-phase flow forming zone 18 to diffuser 22.

Nozzle first-stage element 17 and the reaction chamber cavity form a nozzle. Due to the difference in diameter of nozzle first-stage element 17 ($D_n$) and the larger diameter of the reaction chamber cavity ($D_{cs}$), the first pressure jump (drop) occurs, which creates a depression section in the reaction chamber cavity. After passing through nozzle first-stage element 17, the velocity of flow remains constant, however, the flow becomes supersonic, since the sound velocity decreases.

A plasma discharge is ignited in the depression section. In this case, the initial aqueous medium is fed into nozzle first-stage element 17 at the pressure of more than 0.2 MPa. In the reaction chamber cavity, due to decompression, the aqueous medium effervescence takes place with releasing water vapor and dissolved gases from it (mainly oxygen $O_2$, carbon dioxide $CO_2$ and nitrogen $N_2$, whose content in fresh water is about 7 $mg/kg_{H2O}$, 14 $mg/kg_{H2O}$, and 14 $mg/kg_{H2O}$, respectively).

Thus, the two-phase supersonic flow is formed through which the longitudinal plasma discharge is passed, and then, after passing through the reaction chamber, the flow is exposed to a second pressure jump (rise) in the diffuser (due to backpressure created by control valve 15) accompanying with an avalanche-type condensation of a vapor phase of the two-phase flow.

The plasma discharge in the volume of supersonic two-phase flow of aqueous medium initiates the electromagnetic radiation of ultraviolet spectrum (170-300 nm), visible spectrum (380-400 nm), and infrared spectrum (760-780 nm). In this case, the UV-radiation effect causes a partial sterilization of the aqueous medium being treated.

In flow plasma treatment zone 20, in the presence of oxygen released from the water flow, the synthesis of ozone from oxygen occurs, which allows for treating the aqueous medium to ensure its sterilization and significant improvement of the microbiological indicators of aqueous medium quality.

When the second jump (sudden rise) of pressure takes place, an oscillation spectrum of different physical nature is generated in the aqueous medium flow, including ultrasonic and electromagnetic spectra, promoting the collapse of gas bubbles which, in turn, when collapsing, generate new oscillations, i.e. there is an avalanche-type process of the gas bubbles collapse, that creates a powerful ultrasonic field and a field-produced local overheating of liquid in the bubble collapse zone, resulting in a heat treatment of initial water - its disinfection.

The plant for aqueous medium treatment shown in FIG. 1 includes supply pump 4, DC/AC generator 5, supply head pipeline I and drain pipeline II, valves 8, 9 and 15, flowmeter 11, aqueous medium temperature sensor 12, aqueous medium pressure sensors 13 and 14, and aqueous medium treatment device 1, which represents a supersonic plasma reactor. In this case, the aqueous medium treatment device comprises a reaction chamber that includes elements 18 to 21: two-phase flow forming zone 18 with the first and second annular electrodes 19 and 21 successively arranged in the flow direction and spaced apart at the distance corresponding to the length of flow plasma treatment zone 20, which also is a part of the reaction chamber. Walls of the reaction chamber within zone 20 are made of dielectric material. Annular electrodes 19 and 21 for plasma ignition can be made of various metals and non-metals conducting electric current, and also of porous dielectric with conductive filler.

The length of reaction chamber cavity and its diameter are preferably related by ratio:

$$L = (10 - 15) \cdot D,$$

where $L$ is the length of the reaction chamber cavity, $D$ is the diameter of the reaction chamber cavity. As shown by experiments, with such a ratio of sizes of the reaction chamber cavity, it is possible to use voltage on the electrodes in the range of 500-2000 V, that is preferable in terms of energy saving.

In addition, instrumentation, such as the flowmeter, pressure and temperature sensors (11, 12, 13), can be connected to head pipeline I between supply pump 4 and the input of device 1 for providing the in-stream aqueous medium treatment.

According to the preferred embodiment of the invention, aqueous medium treatment device 1 consists of supply branch pipe 16 in diameter $D_{in}$, nozzle first-stage element 17 in diameter $D_n$ and in length $L_n$, two-phase flow forming zone 18 in diameter $D_{cs}$ and in length $L_s$, annular electrode 19 in diameter $D_{e1}$ and in length $L_{e1}$, flow plasma treatment zone 20 in diameter $Dp_d$ and in length $L_{e2}$, annular electrode 21 in diameter $D_{e2}$ and in length $L_{e2}$, diffuser 22, and outlet branch pipe 23.

The diameters of branch pipes 16 and 23 are selected on condition that the flow velocity is not above 1.0-1.5 m/s.

The diameter of nozzle first-stage element 17 is calculated on condition that the minimum pressure is obtained at the outlet (corresponding to water saturation pressure at a given temperature). The length of nozzle first-stage 17 preferably lies in the range from $0.5 \cdot D_c$ to $3.0 \cdot D_c$.

The diameter of two-phase flow forming zone 18 is determined on condition that the minimum local sound velocity of aqueous medium is 10-20 m/s and amounts to $(1.24\text{-}2.00) \cdot D_c$. The zone length is $(3.0\text{-}10.0) \cdot D_{cs}$.

The diameter of zone of annular electrode 19 amounts to $(1.2\text{-}2.0) \cdot D_c$. The length of the annular electrode is $(0.5\text{-}1.5) \cdot D_{cs}$.

The diameter of flow plasma treatment zone 20 is determined on condition that the minimum local sound velocity of the aqueous medium is $10 \div 20$ m/s and amounts to $(1.24\text{-}2.0) \cdot D_c$. The length of zone 20 is $(3.0\text{-}10.0) \cdot D_{cs}$.

The diameter of annular electrode 21 is $(1.2\text{-}2.0) \cdot D_c$. The length of annular electrode is $(0.5\text{-}1.5) \cdot D_{cs}$.

The total opening angle of diffuser 22 preferably lies in the range of 6 to 30°.

In flow plasma treatment zone 20, a constant or alternating electric field with a voltage of 500-2000 V is created across annular electrodes 19 and 21 and contacts 24. The time of plasma discharge exposure on the aqueous medium flow, i.e. the time of aqueous medium treatment, in the plasma discharge zone is from about 0.0001 to 0.01 seconds. This time is enough to destroy all known kinds of pathogenic microorganisms that live in fresh water bodies.

In order to form the plasma discharge, the reduced pressure in the reaction chamber in zones 18, 19, 20 and 21 is preferable compared to the aqueous medium pressure at the inlet of supply pipe 16. The reduced pressure is achieved by means of the nozzle formed by first-stage element 17 and the reaction chamber cavity. The value of reduced pressure lies in the range from 1 to 10 kPa.

To create the plasma discharge between the annular electrodes in the claimed device, the current strength of 20-200 mA is sufficient (discharge is ignited at the current of about 150 mA, and then the current is reduced to 50-70 mA), as well as the voltage at the electrodes of 900-1000 V. Compared with the prototype, an electrode wear is negligible at such currents.

According to the present invention, all water treatment processes occur in a continuous stream in the reaction chamber of the claimed device. These processes are:

- Hydrodynamic effect on the aqueous medium in stream (sharp decrease in pressure to water boiling and formation of the two-phase flow);
- Plasma discharge with emission of wide spectrum electromagnetic radiation (ultraviolet radiation, visible spectrum radiation, infrared radiation and radio frequency spectrum radiation); thereby the UV-radiation has a fatal effect on microorganisms;
- Effect of the ultrasonic radiation generated in the aqueous medium at the stage of the second jump of pressure (sharp rise), which has a fatal effect on certain microorganisms;
- Synthesis of ozone *in situ* and subsequent disinfection of the aqueous medium through its ozonization with the ozone formed.

Provision can be made for introduction of copper and silver ions into the aqueous medium when selecting an appropriate annular electrode material.

The following are examples of embodiments of the present invention. Not being the only possible, they clearly demonstrate the possibility of achieving a technical result in various embodiments of the invention.

Example 1.

The river water (water temperature was 18°C) was fed via supply head pipeline I to nozzle first-stage element 17 of the reaction chamber using supply pump 4 with a capacity of 1.2 m³/h (the pressure at the inlet of in-stream aqueous medium treatment device 1 was 0.8 MPa). Then, the water drained into supersonic two-phase flow forming zone 18, where the two-phase supersonic flow of the aqueous medium was formed due to effervescence of the aqueous medium with release of water vapor and dissolved gases from it, following which the two-phase flow was subjected to the plasma discharge in flow plasma treatment zone 20. The pressure in flow plasma treatment zone 20 was 0.095 MPa; the pressure at the outlet of in-stream aqueous medium treatment device 1 was 0.28 MPa; the reaction chamber diameter was 6.5 mm, the gap between copper electrodes 19 and 21 was 40 mm, the voltage at electrodes 19 and 21 was 900 V, and the current strength at electrodes 19 and 21 was 50 mA). Samples were taken at the device outlet to measure the main indicators of water purity according to SanPiN 2.1.4.1074-01: total microbial number, content of common coliform bacteria, content of thermotolerant coliform bacteria, content of sulfite-reducing bacteria spores, content of Escherichia coli (*E. coli*), content of *B. subtilis* cells, content of *C. albicans*, and content of *C. cladosporioides* spores.

Example 2.

The river water (water temperature was 20°C) was fed via supply head pipeline I to nozzle first-stage element 17 of the reaction chamber using supply pump 4 with a capacity of 5.0 m$^3$/h (the pressure at the inlet of in-stream aqueous medium treatment device 1 was 1.0 MPa). Then, the water drained into supersonic two-phase flow forming zone 18, where the two-phase supersonic flow of the aqueous medium was formed due to effervescence of the aqueous medium with release of water vapor and dissolved gases from it, following which the two-phase flow was subjected to plasma discharge in flow plasma treatment zone 20. The pressure in flow plasma treatment zone 20 was 0.096 MPa; the pressure at the outlet of in-stream aqueous medium treatment device 1 was 0.30 MPa; the reaction chamber diameter was 6.5 mm, the gap between silver electrodes 19 and 21 was 45 mm, the voltage at electrodes 19 and 21 was 1000 V, and the current strength at electrodes 19 and 21 was 100 mA). Samples were taken at the device outlet to measure the main indicators of water purity according to SanPiN 2.1.4.1074-01.

Example 3.

The river water (water temperature was 22°C) was fed via supply head pipeline I to nozzle first-stage element 17 of the reaction chamber using supply pump 4 with a capacity of 15.0 m$^3$/h (the pressure at the inlet of in-stream aqueous medium treatment device 1 was 1.2 MPa). Then, the water drained into two-phase supersonic flow forming zone 18, where the two-phase supersonic flow of the aqueous medium was formed due to effervescence of the aqueous medium with release of water vapor and dissolved gases from it, following which the two-phase flow was subjected to plasma discharge in flow plasma treatment zone 20. The pressure in flow plasma treatment zone 20 was 0.097 MPa; the pressure at the outlet of in-stream aqueous medium treatment device 1 was 0.32 MPa; the chamber diameter was 6.5 mm, the gap between steel electrodes 19 and 21 was 50 mm, the voltage at electrodes 19 and 21 was 1200 V, and the current strength at electrodes 19 and 21 was 150 mA). Samples were taken at the device outlet to measure the main indicators of water purity according to SanPiN 2.1.4.1074-01.
Results of water purification in the plant according to the present invention are shown in Table 2.

Table 2. Results of water treatment in the plant according to the present invention.

| Indicator | Number of microorganisms, CFU / ml | | | | |
|---|---|---|---|---|---|
| | Before treatment | After treatment | | | According to SanPiN 2.1.4.1074-01 |
| | | Example 1 | Example 2 | Example 3 | |
| TMN (river water) | >500 | 0 | 0 | 0 | ≤ 50 |
| CCB (river water) | 5500 | 0 | 0 | 0 | No |
| TCP (river water) | Detected | 0 | 0 | 0 | No |
| *E. coli* | 1.5·10$^8$ | 0 | 0 | 0 | No |
| Spores and cells of *B. Subtilis* | 900 | 0 | 0 | 0 | No |
| *C. albicans* | 2.4·10$^4$ | 0 | 0 | 0 | No |
| Spores of *C. cladosporioides* | 35 | 0 | 0 | 0 | No |
| Note: TMN - total microbial number, CCB - common coliform bacteria, TCB - thermotolerant coliform bacteria, SSRB - spores of sulfite-reducing bacteria. | | | | | |

Thus, the claimed device for in-stream aqueous medium treatment, and the method for in-stream aqueous medium treatment have shown the high efficiency of purification of the running river water. At the same time, the device provides more efficient and economical water treatment by the plasma discharge in comparison with the prototype.

**Claims**

1. An in-stream aqueous medium treatment device, comprising a reaction chamber with a supply pipe and a discharge branch pipe, and a nozzle first-stage element installed at a reaction chamber inlet, which provides the pressure drop at the reaction chamber inlet, and a diffuser located at a reaction chamber outlet for decelerating a flow, wherein the reaction chamber is made of a dielectric material and is formed by annular electrodes successively arranged in the flow direction and spaced along the chamber length to create the longitudinal plasma discharge in the reaction chamber cavity.

2. The device according to claim 1, wherein the electrodes are made of a metallic conductive material selected from the group consisting of molybdenum, silver, copper, and alloys of said metals.

3. The device according to claim 1, wherein the electrodes are made of stainless steel.

4. The device according to claim 1, wherein the electrodes are made of conductive porous ceramics, graphite or siliconized graphite.

5. An in-stream aqueous medium treatment method comprising directing a pressurized flow into a nozzle first-stage element, with further draining the flow into the reaction chamber for aqueous medium treatment to form a two-phase gas-liquid flow followed by deceleration and condensation of the two-phase flow at the reaction chamber outlet, wherein the longitudinal plasma discharge is created in the reaction chamber, which initiates the UV-radiation and synthesis of ozone from oxygen released from the aqueous phase during formation of the two-phase gas-liquid flow, while during the flow deceleration due to the gas bubbles collapse, an ultrasonic field and a local overheating of the water flow are created.

6. The method according to claim 5, wherein the aqueous medium is supplied to the nozzle first-stage element under pressure in the range from 0.2 to 2 MPa.

7. The method according to claim 5, wherein the longitudinal plasma discharge is created by applying voltage of 500 to 2000 V and current from 20 to 200 mA to the electrodes.

8. The method according to claim 5, wherein the aqueous medium flow is exposed to the plasma discharge for a period of time from $10^{-2}$ to $10^{-4}$ sec.

9. The method according to claim 7, wherein the reaction chamber pressure is maintained in the range from 1 to 10 kPa.

Fig. 1.

Fig. 2.

Europäisches
Patentamt

European
Patent Office

Office européen
des brevets

# EUROPEAN SEARCH REPORT

**Application Number**

EP 17 18 3651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/139853 A1 (ZOLEZZI-GARRETON ALFREDO [CL]) 21 May 2015 (2015-05-21) * paragraph [0046] - paragraph [0109]; claims 1-3,8-10; figures 1,3 * ----- | 1-9 | INV. C02F1/46 |
| X | US 2011/240567 A1 (ZOLEZZI-GARRETON ALFREDO [CL]) 6 October 2011 (2011-10-06) * the whole document * ----- | 1-9 | ADD. C02F1/32 C02F1/34 C02F1/36 C02F1/78 C02F1/461 |
| A | US 2015/041454 A1 (FORET TODD [US]) 12 February 2015 (2015-02-12) * paragraph [0101] * ----- | 1-9 | |
| A | CN 104 671 328 A (UNIV NANJING TECH) 3 June 2015 (2015-06-03) * paragraph [0012] - paragraph [0013] * ----- | 1-9 | |

| | |
|---|---|
| | **TECHNICAL FIELDS SEARCHED (IPC)** |
| | C02F |

The present search report has been drawn up for all claims

| Place of search | Date of completion of the search | Examiner |
|---|---|---|
| The Hague | 1 November 2017 | Du, Mingliu |

EPO FORM 1503 03.82 (P04C01)

## ANNEX TO THE EUROPEAN SEARCH REPORT
## ON EUROPEAN PATENT APPLICATION NO.

EP 17 18 3651

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2017

| Patent document cited in search report | | Publication date | Patent family member(s) | | Publication date |
|---|---|---|---|---|---|
| US 2015139853 | A1 | 21-05-2015 | US 2015139853 A1 | | 21-05-2015 |
| | | | WO 2015077062 A1 | | 28-05-2015 |
| US 2011240567 | A1 | 06-10-2011 | AU 2011213979 A1 | | 25-10-2012 |
| | | | CA 2789402 A1 | | 18-08-2011 |
| | | | CL 2012002219 A1 | | 25-01-2013 |
| | | | CN 102870502 A | | 09-01-2013 |
| | | | CO 6592100 A2 | | 02-01-2013 |
| | | | EA 201201121 A1 | | 28-06-2013 |
| | | | EP 2534931 A2 | | 19-12-2012 |
| | | | JP 2013519503 A | | 30-05-2013 |
| | | | JP 2017018944 A | | 26-01-2017 |
| | | | KR 20120130768 A | | 03-12-2012 |
| | | | MA 34061 B1 | | 05-03-2013 |
| | | | NZ 602420 A | | 26-06-2015 |
| | | | SG 184117 A1 | | 30-10-2012 |
| | | | SG 10201506138U A | | 29-09-2015 |
| | | | US 2011240567 A1 | | 06-10-2011 |
| | | | US 2016272518 A1 | | 22-09-2016 |
| | | | WO 2011098918 A2 | | 18-08-2011 |
| | | | ZA 201206804 B | | 28-05-2014 |
| US 2015041454 | A1 | 12-02-2015 | NONE | | |
| CN 104671328 | A | 03-06-2015 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2272791
- RU 06092004
- UA 35346
- RU 2325329

### Non-patent literature cited in the description

- Drinking water. Hygienic requirements for water quality of centralized drinking water supply systems. Quality control. SanPiN 2.1.4.1074-01. The Ministry of Healthcare of the Russian Federation (Minzdrav), 2002, 62